# EUROPEAN PATENT APPLICATION

(11) **EP 4 752 290 A1**
(43) Date of publication of application: **03.06.2026**
(21) Application number: 25217515.3
(22) Date of filing: 20.11.2025
(51) Int. Cl.: E02F 9/08

(54) **WORK MACHINE**

(30) Priority: 28.11.2024 JP 2024207630
(71) Applicant: Yanmar Holdings Co., Ltd., Osaka (JP)
(72) Inventor: MORIGUCHI, Kazuma, Chikugo-shi (JP)
(74) Representative: Sekiguchi, Kazuya

(57) **Abstract**

[Problem] To provide a work machine capable of improving the workability of a maintenance operation of a controller and facilitating a connection operation to the controller.

[Solution] A hydraulic excavator as a work machine includes a controller, an operation portion on which an operator rides to operate a machine body, and a hood member that covers a portion of the machine body. The operation portion is installed on a first lateral side of the machine body, the hood member is disposed on a second lateral side of the machine body, and the controller is disposed between the operation portion and the hood member.

## Description

### TECHNICAL FIELD

The present invention relates to a work machine.

### BACKGROUND ART

Patent Document 1 discloses a construction machine including a controller disposed in a cab support frame that supports a cab from below.

### PRIOR ART DOCUMENT

### PATENT DOCUMENT

Patent Document 1: Japanese Unexamined Patent Application Publication No. 2016-89807

### SUMMARY OF INVENTION

### TECHNICAL PROBLEM

In recent years, a technique of automatically controlling a work machine, such as a construction machine, based on construction data of a construction site and providing the construction data and various types of information related to the work machine to an operator of the work machine has also been proposed. When such a technique is applied, since a large number of devices (for example, a detection device, a control device other than the above-described controller, and the like) are connected to the controller for realizing the above-described technique, it is desired to facilitate an operation of connecting the devices to the above-described controller.

Furthermore, when the controller is installed below a cab constituting an operation portion as in Patent Document 1, it is necessary to get under the cab in a maintenance operation of the controller, and thus the workability of the maintenance operation may be deteriorated.

The present invention has been made to solve the above problem, and an object of the present invention is to provide a work machine capable of improving the workability of a maintenance operation of a controller and facilitating an operation of connection to the controller.

### SOLUTION TO PROBLEM

According to an aspect of the present invention, a work machine includes a controller, an operation portion on which an operator rides and operates a machine body, and a hood member that covers a portion of the machine body. The operation portion is installed on a first lateral side of the machine body. The hood member is disposed on a second lateral side of the machine body. The controller is disposed between the operation portion and the hood member.

### ADVANTAGEOUS EFFECTS OF INVENTION

With the above configuration, the workability of the maintenance operation of the controller can be improved, and an operation of connection to the controller can be facilitated.

### BRIEF DESCRIPTION OF DRAWINGS

FIG. 1 is a left side view schematically illustrating a configuration of a hydraulic excavator which is an example of a work machine according to an embodiment of the present invention;
FIG. 2 is a right side view schematically illustrating a configuration of the hydraulic excavator;
FIG. 3 is a block diagram schematically illustrating a configuration of a hydraulic system of the hydraulic excavator;
FIG. 4 is a perspective view from a right rear side illustrating an arrangement position of a controller installed in the hydraulic excavator;
FIG. 5 is a front view illustrating an arrangement position of the controller;
FIG. 6 is a cross-sectional view illustrating an arrangement configuration of the controller;
FIG. 7 is a plan view illustrating a configuration of an inclined surface of a housing portion accommodating the controller;
FIG. 8 is a perspective view from a left rear side illustrating a partition plate disposed in the hydraulic excavator;
FIG. 9 is an explanatory diagram illustrating attachment of a cover member of the housing portion; and
FIG. 10 is a perspective view from a right front side, illustrating an arrangement position of a detection device installed in the hydraulic excavator.

### DESCRIPTION OF EMBODIMENTS

An embodiment of the present invention will be described below with reference to the drawings.

### 1. Schematic Configuration of Work Machine

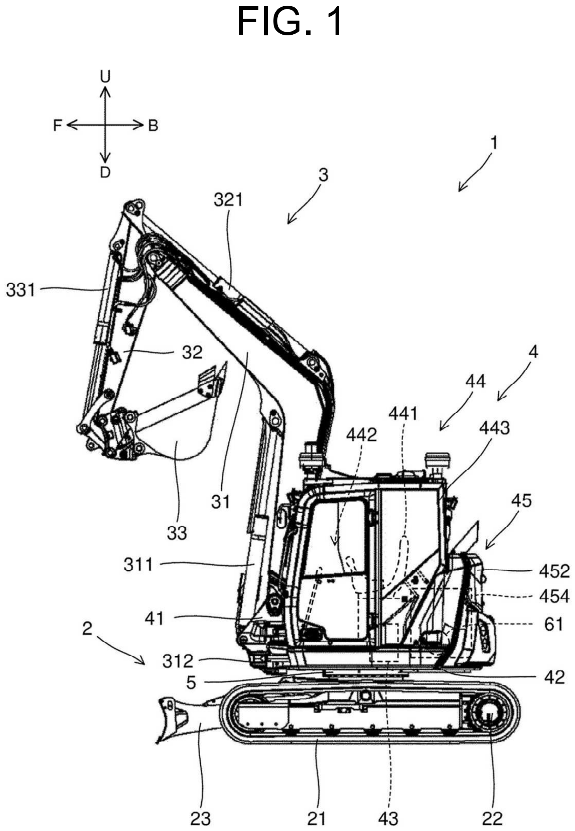

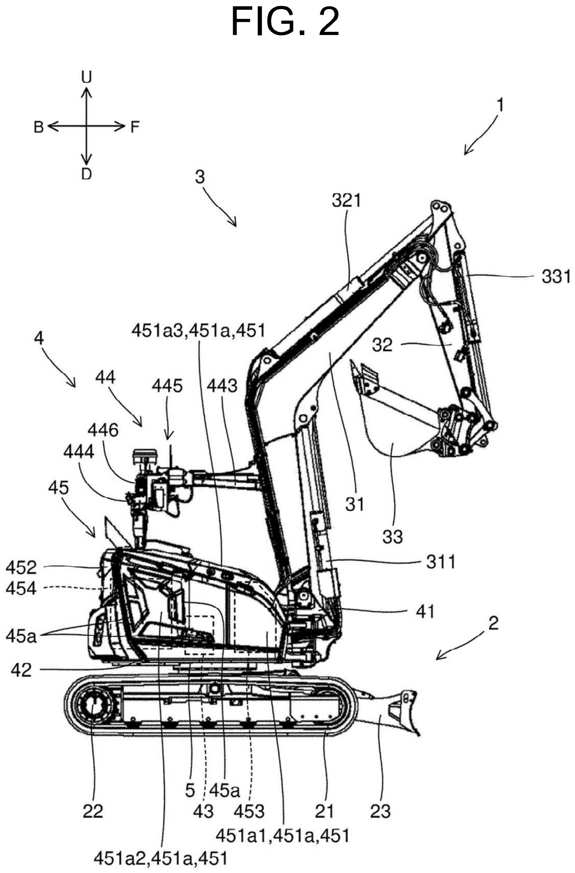

FIGS. 1 and 2 are a left side view and a right side view, respectively, schematically illustrating a configuration of a hydraulic excavator 1 which is an example of a work machine according to an embodiment of the present invention. In FIG. 2, a driver's seat 441 and the like, which will be described below, are not illustrated for convenience. The hydraulic excavator 1 includes a lower traveling body 2, a work implement 3, and an upper swiveling body 4. Hereinafter, the hydraulic excavator 1 may be referred to as a "machine body".

Here, in this embodiment, individual directions are defined as follows. A direction in which an operator (a driver or a manipulator) seated on the driver's seat 441 installed in an operation portion 44 of the upper swiveling body 4 faces a front is referred to as "front", and a direction opposite thereto as "rear". A front-rear direction of the upper swiveling body 4 matches a front-rear direction of the lower traveling body 2 when the upper swiveling body 4 is in a non-swiveling state (swiveling angle: 0 degrees) with respect to the lower traveling body 2. In the drawings, the hydraulic excavator 1 is illustrated in a non-swiveling state of the upper swiveling body 4 with respect to the lower traveling body 2. Moreover, a left side as viewed from the operator seated in the driver's seat 441 is referred to as "left" and a right side as "right". A gravity direction perpendicular to the front-rear direction and a right-left direction is defined as an up-down direction, an upstream side in the gravity direction is defined as "up", and a downstream side is defined as "down". In the drawings, the front side, the rear side, the right side, the left side, the up side, and the down side are denoted by symbols "F", "B", "R", "L", "U", and "D", respectively, when necessary.

The lower traveling body 2 includes a pair of left and right crawlers 21, a pair of left and right traveling motors 22, and a blade 23. The left and right traveling motors 22 drive the left and right crawlers 21, respectively, to enable the hydraulic excavator 1 to move forward and backward. The traveling motors 22 are composed of a hydraulic motor. The blade 23 that performs ground leveling work, earth removal work, and the like is disposed on the front side of the lower traveling body 2. The blade 23 is swung by a blade cylinder (not illustrated). A base end portion of the blade cylinder is connected to the blade 23. The blade cylinder is composed of a hydraulic cylinder.

The work implement 3 is disposed on a first side (the front side in this embodiment) of the machine body (the hydraulic excavator 1) in the front-rear direction. Specifically, the work implement 3 includes a boom 31, an arm 32, and a bucket 33. The boom 31 has a base end portion swingably supported by a swing bracket 41 located in a front portion of the upper swiveling body 4 and is swung in the up-down direction and the front-rear direction by a boom cylinder 311. The boom cylinder 311 has a base end portion supported by the swing bracket 41 and is movable in an extendable and retractable manner. Furthermore, the boom 31 is swung in the left-right direction by a swing cylinder 312. The swing cylinder 312 has a base end portion supported by a left rear portion of the upper swiveling body 4 and a tip end portion supported by a left side portion of the swing bracket 41. The swing cylinder 312 is movable in an extendable and retractable manner.

The arm 32 has a base end portion swingably supported by a tip end portion of the boom 31 and is swung by an arm cylinder 321. The arm cylinder 321 has a base end portion supported by the boom 31, and is movable in an extendable and retractable manner. The bucket 33 has a base end portion swingably supported by a tip end portion of the arm 32 and is swung by a bucket cylinder 331. The bucket cylinder 331 has a base end portion supported by the arm 32, and is movable in an extendable and retractable manner. The boom cylinder 311, the swing cylinder 312, the arm cylinder 321, and the bucket cylinder 331 are each composed of a hydraulic cylinder. The boom 31, the arm 32, and the bucket 33 are independently driven to perform excavation work for excavating earth, sand, and the like.

The upper swiveling body 4 is positioned above the lower traveling body 2 and is disposed in a swiveling available manner with respect to the lower traveling body 2 via a swivel bearing 5. The upper swiveling body 4 includes, in addition to the swing bracket 41, a swivel frame 42, a swivel motor 43, the operation portion 44, and an engine room 45. That is, the hydraulic excavator 1 includes the swing bracket 41, the swivel frame 42, the swivel motor 43, the operation portion 44, and the engine room 45.

The upper swiveling body 4 swivels with respect to the lower traveling body 2 when the swivel motor 43 disposed on the swivel frame 42 is driven. The swivel motor 43 is composed of a hydraulic motor. The swivel frame 42 includes a plurality of metal members joined by welding or the like. A front end portion of the swivel frame 42 supports the swing bracket 41 so as to be swingable (in a swingable manner) in the left-right direction.

The operation portion 44 (also referred to as a driving section) is disposed on a left side portion of the upper swiveling body 4. That is, the operation portion 44 is disposed on a first lateral side (left side in this embodiment) of the machine body (hydraulic excavator 1).

The operation portion 44 is disposed for the operator who boards operates the machine body (hydraulic excavator 1). More specifically, the operation portion 44 includes the driver's seat 441 on which the operator is seated. A plurality of operation members 442 are disposed around the driver's seat 441. The plurality of operation members 442 include levers, switches, and pedals. When the plurality of operation members 442 are operated by the operator, one or more of the traveling motor 22, the swivel motor 43, the boom cylinder 311, the swing cylinder 312, the arm cylinder 321, and the bucket cylinder 331 are driven. This enables traveling of the lower traveling body 2, ground leveling work using the blade 23, excavation work using the work implement 3, swiveling of the upper swiveling body 4, and the like.

Note that the driver's seat 441 and the plurality of operation members 442 are covered with a cab 443. However, instead of the cab 443, a canopy may cover the driver's seat 441 and the plurality of operation members 442. A light 444, a positioning antenna group 445, an indicator lamp 446, and the like are attached to an upper right side of a rear portion of the cab 443, for example.

The engine room 45 includes a right hood 451 and a rear hood 452. The right hood 451 constitutes a right wall of the engine room 45, and the rear hood 452 constitutes a rear wall of the engine room 45. The right hood 451 and the rear hood 452 are disposed so as to be openable and closable in the up-down direction.

The right hood 451 has a plurality of hood members 451a. More specifically, the plurality of hood members 451a include a first hood member 451a1, a second hood member 451a2, and a third hood member 451a3. The first hood member 451a1 is disposed on the right side of the upper swiveling body 4. The first hood member 451a1 is formed by bending a plate-shaped member made of metal (or resin) and extending in the front-rear direction leftward toward the front. That is, the first hood member 451a1 is curved so as to bulge toward a right front side. The first hood member 451a1 is housed in the engine room 45 and covers a right side portion of a fuel tank 453 that stores fuel. That is, the hydraulic excavator 1 includes the hood member 451a (the first hood member 451a1 in this embodiment) that covers a portion of the machine body (the hydraulic excavator 1), and the hood member 451a is disposed on a second lateral side (the right side in this embodiment) of the machine body.

The second hood member 451a2 is disposed behind the first hood member 451a1. Therefore, the second hood member 451a2 is disposed on the right side of the upper swiveling body 4, similarly to the first hood member 451a1. The second hood member 451a2 is formed by bending a plate-shaped member made of metal (or resin) and extending in the front-rear direction leftward toward the rear. That is, the second hood member 451a2 is curved so as to bulge toward a right rear side. In the second hood member 451a2, air inlets 45a penetrating in the left-right direction are formed.

The third hood member 451a3 is disposed on an upper left side of the first hood member 451a1 and the second hood member 451a2. The third hood member 451a3 is formed by bending a plate-like member made of metal (or resin) and extending in the front-rear direction downward toward the front. That is, the third hood member 451a3 is curved so as to bulge forward and upward.

The engine room 45 houses an engine 454 in addition to the fuel tank 453. The engine 454 is a drive source of the hydraulic excavator 1. The engine 454 is constituted by a diesel engine, but is not limited to this, and may be constituted by a gasoline engine, for example. Since the engine 454 is configured by a diesel engine, light oil is stored as the fuel in the fuel tank 453 of this embodiment. However, the fuel is not limited to light oil, and may be, for example, gasoline when the engine 454 is a gasoline engine. Note that the drive source of the hydraulic excavator 1 is not limited to the engine 454, and may be, for example, an electric motor driven by electric power.

The engine room 45 further houses, for example, a radiator that cools cooling water for cooling the engine 454, an intercooler that cools intake air to be supplied to the engine 454, and a condenser that performs air conditioning (cooling, heating, and the like) of the operation portion 44 (all of which are not illustrated). The engine room 45 further includes a fan (not illustrated) that blows air for cooling the radiator, the intercooler, the condenser, and the like. The fan is driven by power of the engine 454 transmitted via a power transmission member, such as a belt. However, the fan may be composed of an electric fan driven by electric power. The engine room 45 further houses a plurality of hydraulic pumps 61. The hydraulic system of the hydraulic excavator 1 including the plurality of hydraulic pumps 61 will be described below.

### 2. Schematic Configuration of Hydraulic System of Work Machine

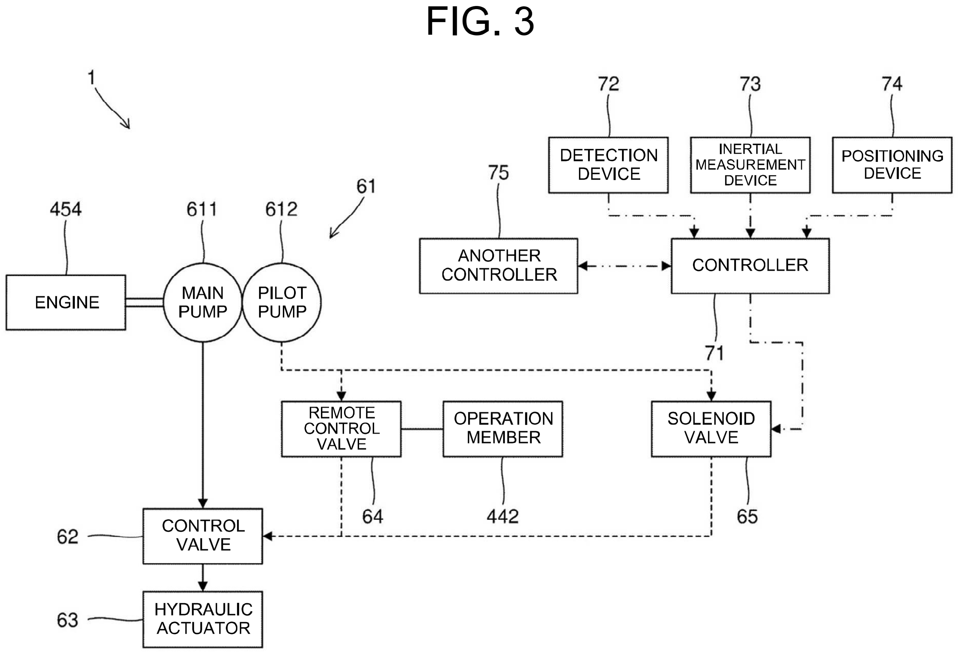

FIG. 3 is a block diagram schematically illustrating a configuration of the hydraulic system of the hydraulic excavator 1. The plurality of hydraulic pumps 61 include a main pump 611 and a pilot pump 612.

The main pump 611 is configured by a variable capacity pump, but is not limited thereto, and may be configured by, for example, a fixed capacity pump. The main pump 611 is connected to a rotation shaft (output shaft) of the engine 454. The main pump 611 is driven by the rotation of the rotation shaft of the engine 454.

The pilot pump 612 is composed of a fixed capacity pump, but is not limited thereto, and may be composed of a variable capacity pump. The pilot pump 612 is connected to the rotation shaft of the engine 454, similarly to the main pump 611. Therefore, the pilot pump 612 is driven by rotation of the rotation shaft of the engine 454. The main pump 611 and the pilot pump 612 are individually connected to a hydraulic oil tank (not illustrated) that stores hydraulic oil.

Note that, although FIG. 3 illustrates, as an example, one main pump 611 and one pilot pump 612, two or more main pumps 611 and two or more pilot pumps 612 may be provided. The number of main pumps 611 and the number of pilot pumps 612 may be different from each other. For example, the number of main pumps 611 may be two, and the number of pilot pumps 612 may be one.

When the main pump 611 is driven by the engine 454, a hydraulic oil in the hydraulic oil tank is supplied to the hydraulic actuator 63 via the control valve 62. In this embodiment, the hydraulic motors (for example, the traveling motor 22 and the swivel motor 43) and the hydraulic cylinders (for example, the boom cylinder 311 and the swing cylinder 312) driven by the hydraulic oil are collectively referred to as a hydraulic actuator 63. That is, the hydraulic actuator 63 includes the hydraulic motors and the hydraulic cylinders.

The control valve 62 is a direction switching valve that controls a flow direction and a flow rate of the hydraulic oil supplied from the main pump 611 to the hydraulic actuator 63. The above-described control by the control valve 62 is performed based on the hydraulic oil (also referred to as pilot oil) supplied from the pilot pump 612 to the control valve 62. The pilot oil is supplied from the pilot pump 612 to the control valve 62 via any one of a remote control valve 64 and a solenoid valve 65.

The remote control valve 64 (also referred to as a pilot valve) is disposed corresponding to each of the devices (for example, the traveling motor 22, the boom cylinder 311, and the like) constituting the hydraulic actuator 63. That is, a plurality of remote control valves 64 are disposed.

Each of the remote control valves 64 are connected to the operation member 442. When the operator operates the operation member 442 (for example, an operation lever), the remote control valves 64 are operated, and the pilot oil is supplied to the control valve 62. The control valve 62 controls the flow direction and the flow rate of the hydraulic oil supplied to the hydraulic actuator 63 based on the pilot oil. That is, the hydraulic excavator 1 of this embodiment is configured to be manually operable.

The solenoid valve 65 integrally includes a plurality of solenoid proportional valves corresponding to the respective devices (for example, the traveling motor 22, the boom cylinder 311, and the like) constituting the hydraulic actuator 63. At least one of the plurality of solenoid proportional valves may be a simple solenoid valve. Therefore, the number of solenoid valves 65 is one, unlike the remote control valves 64. Note that the solenoid valve 65 is not limited to the above configuration. For example, the solenoid valve 65 may include a single solenoid proportional valve, and a plurality of solenoid valves 65 may be disposed.

The above-described solenoid proportional valves included in the solenoid valve 65 are driven based on a drive command output from a controller 71. With this configuration, the hydraulic excavator 1 of this embodiment is automatically operable while being manually operable. Here, the automatic operation means, for example, an operation mode in which excavation work is performed by the work implement 3 (see FIG. 1 and the like) even without an operation by the operator. More specifically, the controller 71 is composed of an electronic control unit also referred to as an ECU. Specifically, the controller 71 is composed of a plurality of electronic control units that can communicate with each other, and at least one of the electronic control units outputs a drive command to the solenoid valve 65. However, the configuration of the controller 71 is not limited to the above, and the controller 71 may be configured by, for example, a single electronic control unit. The controller 71 is connected to a detection device 72, an inertial measurement device 73, and a positioning device 74, and communicates with a separate controller 75. Note that the controller 71 is installed in the upper swiveling body 4 (see FIGS. 1 and 2). That is, the hydraulic excavator 1 includes the controller 71. An arrangement configuration of the controller 71 will be described below.

The detection device 72 and the inertial measurement device 73 individually detect information related to the work implement 3 and individually output the detected information to the controller 71. More specifically, the detection device 72 is attached to the swivel frame 42 (refer to FIG. 1 and the like) and can measure a posture (rotation angle) of the work implement 3 in the left-right direction with respect to the upper swiveling body 4. The detection device 72 is configured by, for example, a limit switch. However, the configuration of the detection device 72 is not limited to the limit switch, and may be, for example, an angle sensor. Therefore, the hydraulic excavator 1 includes a detection device 72 that detects a swing state of the work implement 3 in the left-right direction of the machine body (hydraulic excavator 1). Note that an arrangement position of the detection device 72 will be described below.

The inertial measurement device 73 includes a three-axis angular velocity sensor and a three-directional acceleration sensor and can measure a posture of the work implement 3. The inertial measurement device 73 is attached to each of the boom 31, the arm 32, and the bucket 33 (see FIG. 1 and the like for all), and measures a posture (swing angle) of each of the boom 31, the arm 32, and the bucket 33 in the up-down direction and the front-rear direction. Note that an angle sensor may be used instead of or in addition to the inertial measurement device 73 to measure a posture of each of the boom 31, the arm 32, and the bucket 33.

The positioning device 74 includes the positioning antenna group 445 (see FIG. 2), and acquires a position of the hydraulic excavator 1 as, for example, information on latitudes and longitudes by using a positioning signal received by the positioning antenna group 445 from a positioning satellite. For example, the positioning device 74 receives a positioning signal from a reference station, not illustrated, by an appropriate method and then, performs positioning by using a publicly known Real Time Kinematic GNSS (RTK-GNSS) method. The positioning device 74 outputs positional information of the hydraulic excavator 1 to the controller 71. Note that, the positioning device 74 may perform positioning by using another method, such as a Differential GNSS (DGNSS) method. Furthermore, the positioning of the hydraulic excavator 1 may be performed by installing a total station outside the hydraulic excavator 1 and using a prism, a light receiver, or the like corresponding to the total station.

The separate controller 75 is composed of an electronic control unit also referred to as an ECU, similarly to the controller 71. Specifically, the separate controller 75 is composed of a plurality of electronic control units that can communicate with each other, but is not limited thereto, and may be composed of, for example, a single electronic control unit. The separate controller 75 performs, for example, control of the hydraulic excavator 1 other than control related to the automatic operation. The separate controller 75 controls, for example, a speed of the engine 454 or a discharge amount of the main pump 611. The separate controller 75 performs the above-described control and communicates with the controller 71 to transmit, to the controller 71, information on the hydraulic excavator 1 that the separate controller 75 has.

To the controller 71, construction data is supplied from a construction data (design data) storage server via a communication line, such as the Internet. However, acquisition of the construction data by the controller 71 is not limited to the above-described method, and, for example, the controller 71 may store the construction data in advance.

The controller 71 calculates a drive command to be output to the solenoid valve 65 based on various types of information acquired from the detection device 72, the inertial measurement device 73, the positioning device 74, and the separate controller 75, and the above-described construction data, and outputs the drive command to the solenoid valve 65. Thus, the solenoid valve 65 is driven, and the hydraulic excavator 1 automatically performs the excavation work. Therefore, the controller 71 controls the machine body based on the posture information and the position information of the machine body (particularly, the work implement 3) and the construction data. An arrangement configuration of the controller 71 will be described below.

### 3. Arrangement Configuration of Controller

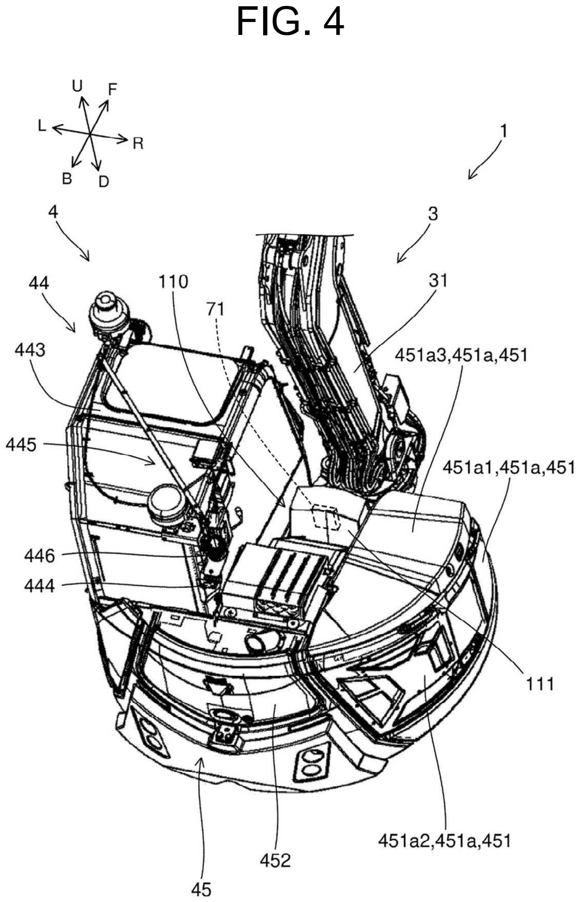

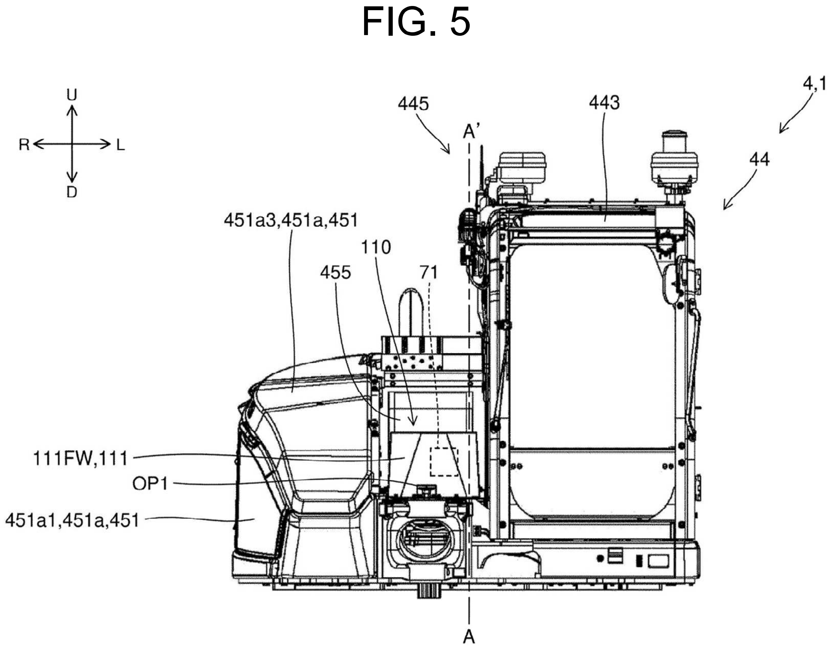

FIGS. 4 and 5 are a perspective view from a right rear and a front view, respectively, illustrating the arrangement position of the controller 71.

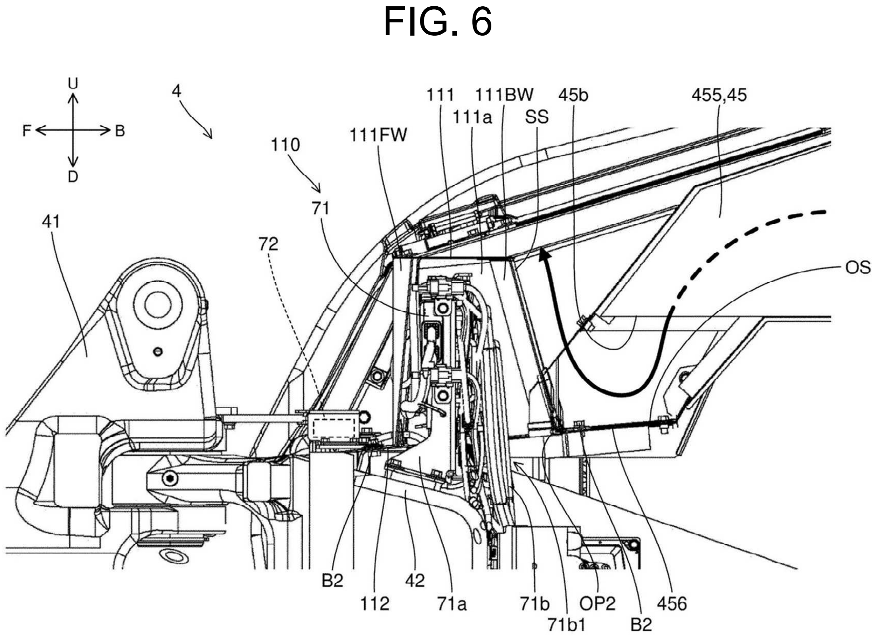

FIG. 6 is a cross-sectional view illustrating the arrangement configuration of the controller 71. In FIG. 4, the lower traveling body 2 is omitted for convenience. In FIG. 5, the lower traveling body 2, the work implement 3, and the swing bracket 41 are omitted for convenience.

In FIG. 6, a cross section obtained by cutting the upper swiveling body 4 in the up-down direction at a position where a line A-A ' in FIG. 5 passes and enlarging the vicinity of the controller 71. Furthermore, in FIG. 6, a flow of air discharged from an exhaust port 45b described below is indicated by a thick arrow.

The controller 71 is disposed near a center of a front portion of the upper swiveling body 4. More specifically, the controller 71 is fixed to the swivel frame 42 via an attachment member 71a (particularly, see FIG. 6). That is, the hydraulic excavator 1 includes an attachment member 71a to which the controller 71 is attached. The attachment member 71a is composed of a metallic plate-like member which extends in the left-right direction and has left and right end portions that are bent forward. Lower end portions of the left and right end portions that are bent forward are connected to a center of a front portion of the swivel frame 42. Therefore, the swivel frame 42 (machine body) supports the attachment member 71a.

The controller 71 attached to the swivel frame 42 via the attachment member 71a is located on the right side of the cab 443 and on the left side of the first hood member 451a1. In other words, the cab 443, the first hood member 451a1, and the controller 71 are arranged in the order of the cab 443, the controller 71, and the first hood member 451a1 from the left side to the right side (particularly, see FIG. 5). That is, the controller 71 is disposed between the operation portion 44 and the hood member 451a (the first hood member 451a1 in this embodiment) in the left-right direction.

With the above configuration, when the maintenance operation of the controller 71 is performed, it is not necessary to get under the operation portion 44. Thus, the workability of the maintenance operation (also referred to as maintainability) can be improved as compared with a case where a worker gets under the operation portion 44. Furthermore, the controller 71 may be disposed at a position that is easily accessed from an outside of the hydraulic excavator 1 (particularly, from a front side of the hydraulic excavator 1) by an assembly worker of the hydraulic excavator 1, a maintenance worker of the above-described maintenance operation, or the like. Thus, even in a configuration in which a plurality of devices (the solenoid valve 65, the detection device 72, the inertial measurement device 73, and the like) are connected to the controller 71, a connection operation to the controller 71 can be easily performed. Thus, the workability of the maintenance operation of the controller 71 can be improved, and the connection operation to the controller 71 can be facilitated.

In particular, as illustrated in FIG. 4, the work implement 3 is located in front of the controller 71. That is, the controller 71 is disposed on the first side (the front side in this embodiment) of the machine body (the hydraulic excavator 1) in the front-rear direction and on a second side (the rear side in this embodiment) of the work implement 3 in the front-rear direction. Specifically, the controller 71 and the work implement 3 are located side by side in the front-rear direction. That is, the controller 71 is arranged side by side in the front-rear direction with respect to the work implement 3.

When the hydraulic excavator 1 includes the work implement 3 disposed on the first side (the front side in this embodiment) of the machine body (the hydraulic excavator 1) in the front-rear direction and the controller 71 is disposed on the same side as the work implement 3, the accessibility to the controller 71 from the work implement 3 side is improved. However, when the controller 71 is disposed on the same side as the work implement 3, interference between the controller 71 and the work implement 3 is preferably avoided. From such a viewpoint, as in this embodiment, the controller 71 is preferably disposed on the first side of the machine body in the front-rear direction and on the second side (the rear side in this embodiment) of the work implement 3 in the front-rear direction.

The following configuration is desirable from the viewpoint of effectively utilizing a dead space located behind (immediately behind) the work implement 3 to efficiently (compactly) arrange the controller 71 in the hydraulic excavator 1. That is, as in this embodiment, the controller 71 is preferably arranged in the front-rear direction with respect to the work implement 3 (on the first side of the hydraulic excavator 1 in the front-rear direction and on the second side of the work implement 3 in the front-rear direction).

Particularly, as illustrated in FIG. 6, the controller 71 is attached to a front surface of the attachment member 71a. The work implement 3 is located in front of the front surface of the attachment member 71a. That is, the front surface of the attachment member 71a and the work implement 3 face each other. Therefore, the controller 71 is attached to the attachment member 71a at a position facing the work implement 3 (in this embodiment, the front surface of the attachment member 71a). Note that, in addition to the controller 71, various electric components (for example, a relay, a connector, and the like) are attached to the attachment member 71a.

Even in the configuration in which the controller 71 is attached to the attachment member 71a, it is desirable to arrange the controller 71 in a dead space located behind the work implement 3 to achieve a compact (efficient) arrangement of the controller 71. From this viewpoint, as in this embodiment, the controller 71 is preferably attached to the attachment member 71a at a position facing the work implement 3 (in this embodiment, the front surface of the attachment member 71a).

The controller 71 is housed in a housing portion 110. That is, the hydraulic excavator 1 includes the housing portion 110 that houses the controller 71. More specifically, the housing portion 110 has a cover member 111 and a bottom plate 112. The cover member 111 is composed of a hollow member made of metal having a bottom surface opened downward. The cover member 111 is attached to an upper surface of the bottom plate 112.

When the cover member 111 is attached to the bottom plate 112, a left side surface of the cover member 111 faces the cab 443, and a right side surface of the cover member 111 faces the first hood member 451a1 (particularly, see FIG. 5). A front surface of the cover member 111 faces the boom 31 (particularly, see FIG. 4). That is, the housing portion 110 is disposed to face all of the operation portion 44, the hood member 451a (the first hood member 451a1 in this embodiment), and the work implement 3 (the boom 31 in this embodiment).

The following configuration is desirable from the viewpoint of reliably realizing the configuration in which the hydraulic excavator 1 includes the housing portion 110 that houses the controller 71 and the controller 71 is disposed on the second side in the front-rear direction with respect to the work implement 3, between the operation portion 44 and the hood member 451a. That is, as in this embodiment, the housing portion 110 is preferably disposed to face all of the operation portion 44, the hood member 451a (the first hood member 451a1 in this embodiment), and the work implement 3 (the boom 31 in this embodiment).

A front wall 111FW of the cover member 111 has a first opening OP1 that penetrates the front wall 111FW in the front-rear direction (particularly, see FIG. 5). That is, the housing portion 110 has the first opening OP1. The first opening OP1 is formed in a rectangular shape when the cover member 111 is viewed from the front. A shape of the first opening OP1 is not limited to a rectangle, and may be a circle, an oval, or a polygon other than the rectangle, for example.

The bottom plate 112 is located on a lower end side of the housing portion 110 and is composed of a metal plate-like member extending in the front-rear direction and the left-right direction. The bottom plate 112 has a second opening OP2 that penetrates the bottom plate 112 in the up-down direction. That is, the housing portion 110 has the second opening OP2, and the second opening OP2 is formed on a lower end side of the housing portion 110. In particular, the second opening OP2 is located below the cover member 111 attached to the upper surface of the bottom plate 112. Therefore, the cover member 111 is disposed above the second opening OP2. The second opening OP2 is formed in a rectangular shape when the bottom plate 112 is viewed from above. A shape of the second opening OP2 is not limited to a rectangle, and may be a circle, an oval, or a polygon other than the rectangle, for example.

The bottom plate 112 has a front end portion fixed to the vicinity of a center of a front portion of the swivel frame 42. That is, the bottom plate 112 constitutes the housing portion 110 and constitutes an exterior of the upper swiveling body 4. Therefore, the second opening OP2 formed in the bottom plate 112 allows an inside of the housing portion 110, to be specific, an inside of the cover member 111, to communicate with an inside of the upper swiveling body 4. That is, the second opening OP2 communicates with an inside of the machine body (hydraulic excavator 1).

The attachment member 71a for attaching the controller 71 is located from an upper side to a lower side of the second opening OP2. To be specific, the attachment member 71a is located through the second opening OP2. That is, the attachment member 71a passes through the second opening OP2 in the up-down direction and is supported by the machine body (the swivel frame 42 in this embodiment).

The following configuration is desirable from the viewpoint of easily realizing that a member (the controller 71 or the like in this embodiment) or a portion of the member located above the second opening OP2 is covered with the cover member 111 and disposing the controller 71 firmly and compactly. That is, as in this embodiment, in a configuration in which the hydraulic excavator 1 includes the attachment member 71a to which the controller 71 is attached, the cover member 111 is preferably disposed above the second opening OP2, and the attachment member 71a preferably passes through the second opening OP2 and is preferably supported by the machine body.

A plurality of cables 71b are connected to the controller 71. For example, some of the plurality of cables 71b (also referred to as some of the cables 71b) connect the controller 71 and the solenoid valve 65 (refer to FIG. 3) located inside the upper swiveling body 4 to each other. Some of the cables 71b are connected to the detection device 72 in addition to the controller 71 and the solenoid valve 65. Some of the others of the cables 71b connect the controller 71 and the separate controller 75 (see FIG. 3) located inside the upper swiveling body 4 to each other. The plurality of cables 71b are routed through the second opening OP2.

From the viewpoint of facilitating the connection between the controller 71 and the device (for example, the solenoid valve 65) located inside the hydraulic excavator 1, as in this embodiment, the housing portion 110 preferably has the second opening OP2 that communicates with the inside of the machine body (hydraulic excavator 1).

The following configuration is desirable from the viewpoint of avoiding a member located through the second opening OP2 (for example, the attachment member 71a, the plurality of cables 71b, or the like) from hindering access to the controller 71 from above the housing portion 110. That is, as in this embodiment, the second opening OP2 is preferably formed on a lower end side of the housing portion 110.

Note that an exhaust port 45b formed in the engine room 45 is located behind the housing portion 110. The exhaust port 45b is formed to be opened downward in a lower end portion of an exhaust duct 455 that extends in a direction in which an upper side thereof is inclined backward with respect to the up-down direction. The exhaust port 45b causes the inside of the upper swiveling body 4 to communicate with the outside of the upper swiveling body 4 (the outside of the hydraulic excavator 1). That is, the hydraulic excavator 1 includes the exhaust port 45b, and the exhaust port 45b is formed on the second side (rear side in this embodiment) in the front-rear direction with respect to the housing portion 110.

A protruding plate 456 that protrudes backward from a rear end portion of the bottom plate 112 is disposed at a position facing the exhaust port 45b. The protruding plate 456 and the bottom plate 112 are integrally connected to each other. In a state where the cover member 111 is attached to the bottom plate 112, a rear wall 111BW of the cover member 111 located on the rear side extends forward and upward from a front end portion of the protruding plate 456. In this embodiment, a rear surface of the rear wall 111BW of the cover member 111 is also referred to as an inclined surface SS. That is, the housing portion 110 has the inclined surface SS located on the second side (in this embodiment, the rear side) of the housing portion 110 in the front-rear direction, and the inclined surface SS is inclined toward the first side (in this embodiment, the front side) in the front-rear direction from the lower side toward the upper side.

In this embodiment, an upper surface of the protruding plate 456 (a surface facing the exhaust port 45b) is also referred to as an opposing surface OS. That is, the hydraulic excavator 1 includes the opposing surface OS extending from a lower end of the inclined surface SS toward the second side (the rear in this embodiment) in the front-rear direction, and the opposing surface OS faces the exhaust port 45b.

When the fan housed in the engine room 45 is driven by the engine 454 housed in the engine room 45 (refer to FIG. 1 and the like), air is sucked (taken) into the engine room 45 via the air inlets 45a (refer to FIG. 2 and the like). The air sucked into the engine room 45 hits the radiator, the intercooler, the condenser, and the like and flows toward the exhaust duct 455 in the engine room 45 while performing heat exchange with these components. Therefore, a temperature of the air flowing in the engine room 45 gradually increases toward the exhaust duct 455.

The air having flowed into the exhaust duct 455 is discharged to the outside of the hydraulic excavator 1 via the exhaust port 45b. That is, the exhaust port 45b enables air to be discharged from the inside of the machine body (the hydraulic excavator 1) to the outside of the machine body. Specifically, the air (exhaust air) immediately after being discharged from the exhaust port 45b flows downward because the exhaust port 45b is opened downward. Specifically, the exhaust air flows toward the opposing surface OS facing the exhaust port 45b. The opposing surface OS guides the flowing air to the inclined surface SS, and the inclined surface SS guides the air upward (specifically, forward and upward). Thus, the exhaust air having a relatively high temperature is discharged toward the upper side of the hydraulic excavator 1.

The following configuration is desirable from the viewpoint of easily discharging relatively high-temperature air flowing inside the machine body to the outside of the machine body to protect the controller 71 housed in the housing portion 110 from the relatively high-temperature air. That is, as in this embodiment, the hydraulic excavator 1 preferably includes the exhaust port 45b through which air can be discharged from the inside of the machine body (hydraulic excavator 1) to the outside of the machine body. In order to prevent the air discharged from the exhaust port 45b from interfering with the excavation work or the like performed by the work implement 3, the exhaust port 45b is preferably formed as far as possible from the work implement 3. From this viewpoint, as in this embodiment, the exhaust port 45b is preferably formed on the second side (rear side in this embodiment) in the front-rear direction with respect to the housing portion 110.

In the configuration in which the housing portion 110 has the inclined surface SS located on the second side (in this embodiment, the rear side) of the housing portion 110 in the front-rear direction, the following configuration is desirable from the viewpoint of smoothly guiding, upward by the inclined surface SS, the relatively high-temperature air discharged from the exhaust port 45b. That is, as in this embodiment, the inclined surface SS is preferably inclined toward the first side in the front-rear direction (the front in this embodiment) from the lower side toward the upper side. The above configuration is also preferable from the viewpoint of reducing a volume of sound generated when the air is discharged from the exhaust port 45b.

In the configuration in which the hydraulic excavator 1 includes the opposing surface OS extending from the lower end of the inclined surface SS toward the second side (the rear side in this embodiment) in the front-rear direction, the following configuration is desirable from the viewpoint of avoiding the relatively high-temperature air discharged from the exhaust port 45b from directly hitting the controller 71. That is, as in this embodiment, the exhaust port 45b preferably faces the opposing surface OS.

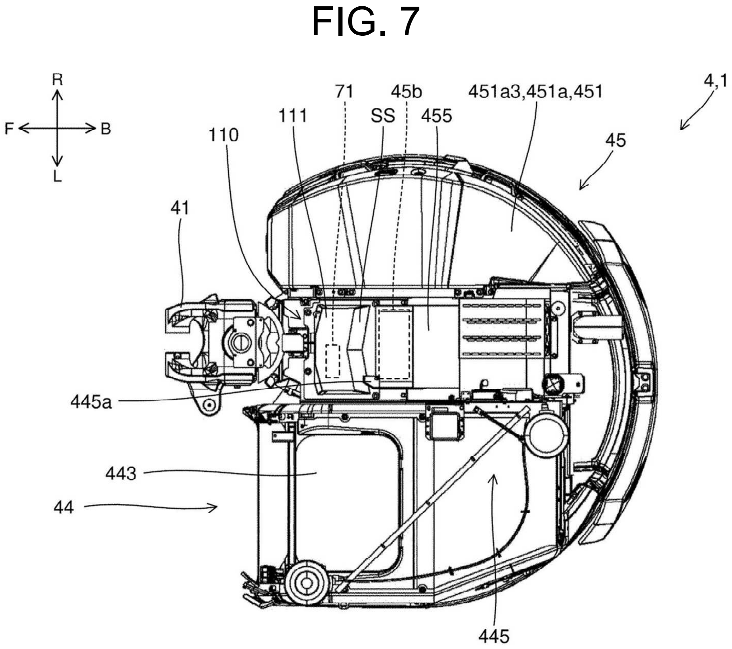

Note that a central portion of the inclined surface SS in the left-right direction is located in front of each of the left and right end portions. More details are as follows. FIG. 7 is a plan view illustrating a configuration of the inclined surface SS. The inclined surface SS has a width (length in the left-right direction) that decreases toward the front. That is, the width of the inclined surface SS becomes narrower toward the first side (the front in this embodiment) in the front-rear direction.

From the viewpoint of reliably realizing the configuration in which the inclined surface SS smoothly guides the relatively high-temperature air discharged from the exhaust port 45b upward, as in this embodiment, the width of the inclined surface SS is preferably narrowed toward the first side in the front-rear direction (the front in this embodiment).

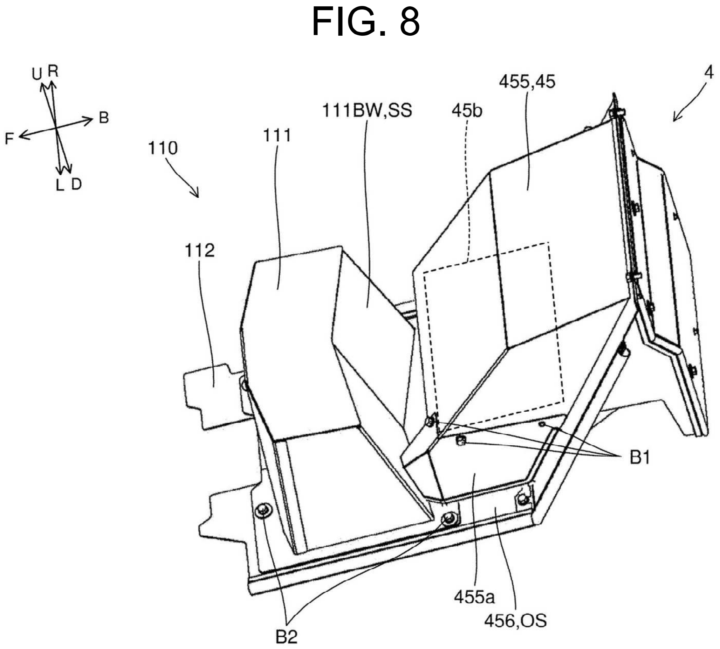

A partition plate 455a is attached to a lower end portion of the exhaust duct 455. That is, the hydraulic excavator 1 includes the partition plate 455a. More details are as follows. FIG. 8 is a perspective view illustrating a configuration of the partition plate 455a as viewed from a left back side. The partition plate 455a is configured by bending a portion of a front end portion of a metal plate-like member extending in the up-down direction and the front-rear direction toward a right front side and bending a remaining portion of the front end portion toward the right side. The bent portion of the front end portion and the remaining portion are joined to each other by welding or the like.

In particular, a left side surface of the partition plate 455a is orthogonal to an axis along the left-right direction. That is, the left side surface of the partition plate 455a is located to face the left. The cab 443 is located on the left side of the partition plate 455a (see FIG. 7). Therefore, the partition plate 455a is disposed to face the operation portion 44.

The partition plate 455a is disposed to cover a left side portion of the exhaust port 45b. More specifically, an upper end portion of the partition plate 455a is fixed to the lower end portion of the exhaust duct 455 (the left side portion of the exhaust port 45b) by a plurality of bolts B1. A lower end portion of the partition plate 455a is in contact with the opposing surface OS that faces the exhaust port 45b. The (bent) front end portion of the partition plate 455a is in contact with the inclined surface SS extending forward and upward from the opposing surface OS. Therefore, the partition plate 455a extends from the exhaust port 45b toward the inclined surface SS and the opposing surface OS.

When the relatively high-temperature air discharged from the exhaust port 45b hits the operation portion 44, a temperature of the operation portion 44 rises, and, for example, cooling may be less effective in the operation portion 44. Therefore, it is desirable that the air discharged from the exhaust port 45b hardly flows to the operation portion 44. From this viewpoint, as in this embodiment, in the configuration in which the hydraulic excavator 1 includes the partition plate 455a that is disposed to face the operation portion 44, the partition plate 455a preferably extends from the exhaust port 45b toward the inclined surface SS and the opposing surface OS.

### 4. Attachment of Cover Member

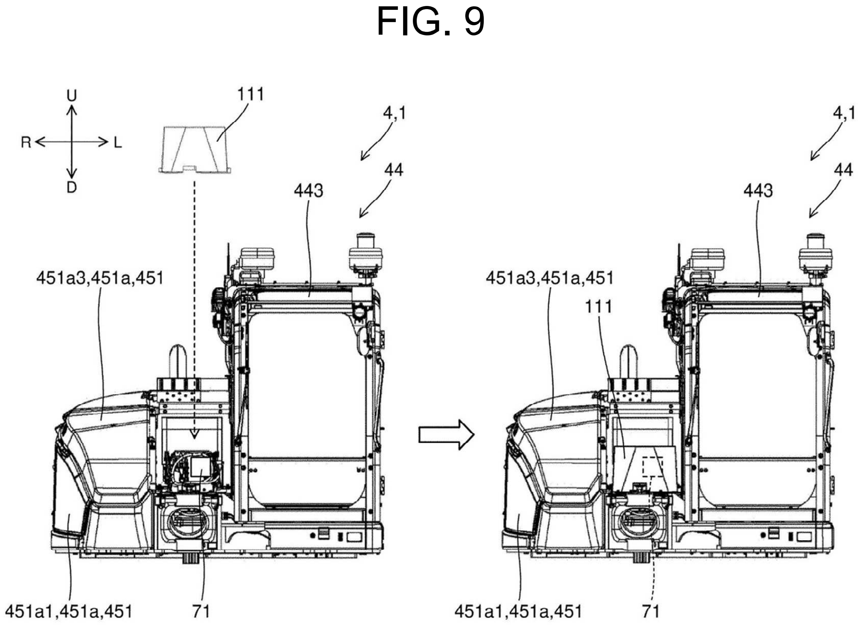

Attachment of the cover member 111 will be described with reference to FIG. 9. FIG. 9 is an explanatory diagram illustrating the attachment of the cover member 111.

In the attachment of the cover member 111 to the bottom plate 112, the controller 71 is fixed to the swivel frame 42 via the attachment member 71a before the cover member 111 is disposed. Then, the cover member 111 is moved from above to below the controller 71. At this time, the cover member 111 is moved while a downward opening portion of the cover member 111 is made to correspond to the controller 71. Thus, the cover member 111 can be disposed while covering the controller 71. That is, the cover member 111 covers the controller 71. Then, a lower end portion of the cover member 111 and the bottom plate 112 are connected to each other by a plurality of bolts B2 (refer to FIGS. 6 and 8). Thus, the cover member 111 is attached to the bottom plate 112.

Note that the bolts B2 located on the front side of the cover member 111 fixes the bottom plate 112 to the swivel frame 42 while fixing the cover member 111 to the bottom plate 112. When the plurality of bolts B2 are removed, the cover member 111 can be easily removed from the bottom plate 112. That is, the cover member 111 is detachably attached to the machine body (the hydraulic excavator 1).

The following configuration is desirable from the viewpoint of protecting the controller 71 housed in the housing portion 110 from, for example, dirt or the like coming from the outside of the hydraulic excavator 1. That is, as in this embodiment, the housing portion 110 preferably has the cover member 111 that covers the controller 71. However, even with this configuration, it is desirable to suppress (as much as possible) deterioration in the workability of the maintenance operation of the controller 71. From this viewpoint, as in this embodiment, the cover member 111 is preferably detachably attached to the machine body (hydraulic excavator 1).

Note that, as illustrated in FIG. 6, in a state where the cover member 111 is attached to the bottom plate 112, the inner wall 111a of the cover member 111 and the controller 71 are disposed without being in contact with each other. That is, the controller 71 is located apart from the inner wall 111a of the cover member 111. The inner wall 111a of the cover member 111 constitutes an inner wall 110a of the housing portion 110. Therefore, the controller 71 is located away from the inner wall 110a of the housing portion 110.

For example, even when the relatively high-temperature air discharged from the exhaust port 45b hits the housing portion 110 and a temperature of the inner wall 110a of the housing portion 110 rises, it is desirable to suppress a temperature rise (overheat) of the controller 71 housed in the housing portion 110. From this viewpoint, as illustrated in FIG. 6, the controller 71 housed in the housing portion 110 is preferably located away from the inner wall 110a of the housing portion 110.

Since the controller 71 is located away from the inner wall 110a of the housing portion 110 and the attachment member 71a of the controller 71 is disposed separately from the housing portion 110, the housing portion 110 of this embodiment lacks a function of attaching the controller 71. That is, the attachment member 71a is installed in a portion other than the housing portion 110. That is, the housing portion 110 does not include the attachment member 71a for attaching the controller 71.

For example, when the attachment member 71a is disposed in a constituent member (for example, the cover member 111) constituting the housing portion 110, heat is transferred from the constituent member to the controller 71 via the attachment member 71a, and a temperature of the controller 71 may rise. Therefore, it is desirable to block such heat transfer to avoid the temperature rise of the controller 71. From this viewpoint, as in this embodiment, the housing portion 110 preferably does not include the attachment member 71a for attaching the controller 71.

### 5. Arrangement Position of Detection Device

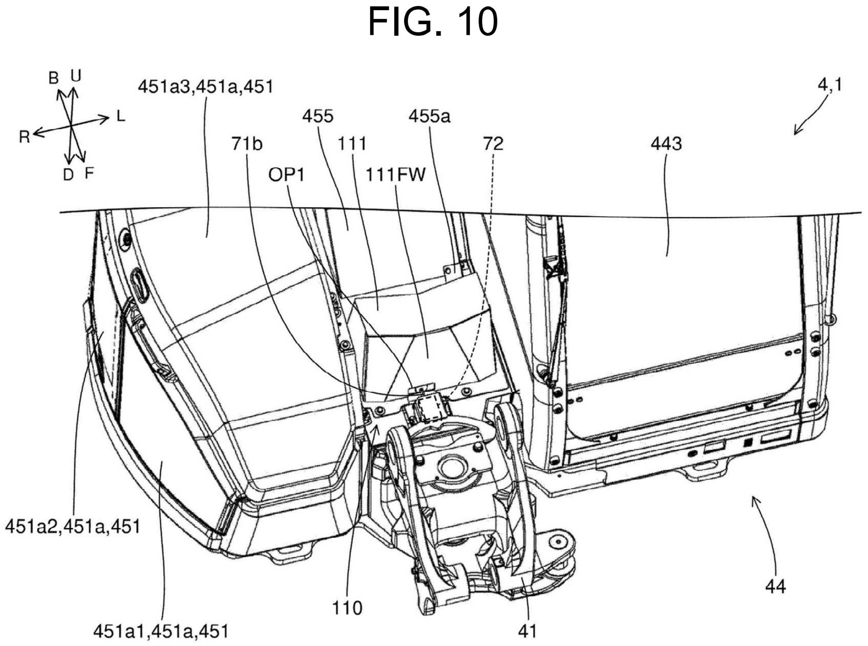

Here, an arrangement position of the detection device 72 will be described with reference to FIG. 10. FIG. 10 is a perspective view from the right front side illustrating the arrangement position of the detection device 72.

The detection device 72 is disposed on the swivel frame 42. More specifically, the detection device 72 is disposed behind the swing bracket 41 and in front of the cover member 111. A predetermined interval is provided between the detection device 72 and the cover member 111. That is, the housing portion 110 (the cover member 111) is located away from the detection device 72. In particular, the detection device 72 is disposed at a position that is in front of the first opening OP1 that is formed in the front wall 111FW of the cover member 111 and penetrates the cover member 111 in the front-rear direction (opens forward) and faces the first opening OP1. That is, the detection device 72 is disposed at a position facing the first opening OP1.

In addition to the detection device 72, the swing bracket 41 is also located at a position facing the first opening OP1. As described above, the swing bracket 41 swingably supports the work implement 3 (see FIG. 1 and the like). Therefore, the first opening OP1 faces the work implement 3.

The detection device 72 disposed in front of the cover member 111 (housing portion 110) and the controller 71 housed in the housing portion 110 are connected to each other via some of the cables 71b as described above. Some of the cables 71b are routed through the first opening OP1 in addition to the second opening OP2 (refer to FIG. 6). Therefore, the first opening OP1 enables the detection device 72 and the controller 71 to be connected to each other even in a state where the cover member 111 is attached to the bottom plate 112 (a state where the controller 71 is housed in the housing portion 110).

From the viewpoint of facilitating the routing of the connection member (in this embodiment, some of the cables 71b) extending from the inside of the housing portion 110 toward the direction in which the work implement 3 is located, as in this embodiment, the housing portion 110 preferably has the first opening OP1 facing the work implement 3.

In the configuration in which the hydraulic excavator 1 includes the detection device 72 that detects a swing state of the work implement 3 in the left-right direction of the machine body (hydraulic excavator 1), the following configuration is desirable from the viewpoint of realizing the arrangement of the detection device 72 suitable for facilitating the connection between the detection device 72 and the controller 71. That is, as in this embodiment, the detection device 72 is preferably disposed at a position facing the first opening OP1.

For example, when the cover member 111 is attached, it is desirable to avoid the cover member 111 from coming into contact with the positioned detection device 72 and shifting the arrangement position of the detection device 72. From this viewpoint, as in this embodiment, the housing portion 110 is preferably disposed away from the detection device 72.

### 6. Housing of Excess Portion of Cable

As illustrated in FIG. 6, the plurality of cables 71b are connected to the controller 71. In this embodiment, at least one of the plurality of cables 71b is configured to be longer than a length between connection positions, and thus an excess portion 71b1 of the cable 71b is generated. The excess portion 71b1 of the cable 71b is wound, for example, in a spiral shape and is housed in the housing portion 110 or in a portion from the housing portion 110 to the inside of the upper swiveling body 4. The arrangement position of the excess portion 71b1 of the cable 71b may be in front of or behind the attachment member 71a. In order to reduce the number of components, the excess portion 71b1 of the cable 71b is preferably fixed to the attachment member 71a.

### 7. Supplemental Description

In this embodiment, a case where the left side of the machine body is referred to as a "first lateral side of the machine body" and the right side of the machine body is referred to as a "second lateral side of the machine body" has been described, but the present invention is not limited thereto. For example, the right side of the machine body may be referred to as the "first lateral side of the machine body", and the left side of the machine body may be referred to as the "second lateral side of the machine body". That is, the left and right may be reversed. Even when the left and right are reversed, the effects of this embodiment described above can be obtained as long as the controller 71 is disposed between the operation portion 44 and the hood member 451a.

In this embodiment, a case where the front is referred to as a "first side in the front-rear direction" and the rear is referred to as a "second side in the front-rear direction" has been described, but the present invention is not limited thereto. For example, the rear side may be referred to as the "first side in the front-rear direction", and the front side may be referred to as "the second side in the front-rear direction". That is, the front-rear arrangement may be reversed.

Although the configuration in which the hydraulic excavator 1 automatically performs the excavation work has been described as the automatic operation of the hydraulic excavator 1 in this embodiment, the automatic operation function of the hydraulic excavator 1 is not limited thereto. For example, as the automatic operation of the hydraulic excavator 1, the construction data acquired by the controller 71 and a state of the work implement 3 at that time point may be displayed on a display device (not illustrated) disposed in the operation portion 44. That is, the automatic operation function of the hydraulic excavator 1 may include a guidance function. Note that, when the hydraulic excavator 1 performs only the above-described display (guidance) as the automatic operation, the solenoid valve 65 is not required.

In this embodiment, the hydraulic excavator 1 has been described as an example of the work machine. However, the work machine is not limited to the hydraulic excavator 1, and may be a construction machine, such as a wheel loader or a mobile crane. Moreover, the work machine may be an agricultural machine, such as a combine harvester, a tractor, or the like.

### 8. Appendices

The hydraulic excavator 1 described in this embodiment can also be expressed as a work machine as illustrated in the following appendices.

A work machine of Appendix 1, comprises
a controller,
an operation portion on which an operator rides and operates a machine body, and
a hood member that covers a portion of the machine body, wherein
the operation portion is installed on a first lateral side of the machine body,
the hood member is disposed on a second lateral side of the machine body, and
the controller is disposed between the operation portion and the hood member.

A work machine of Appendix 2 further comprises, in the work machine described in Appendix 1,
a work implement disposed on a first side of the machine body in a front-rear direction, wherein
the controller is disposed on the first side of the machine body in the front-rear direction and on a second side of the work implement in the front-rear direction.

According to a work machine of Appendix 3, in the work machine described in Appendix 2,
the controller is arranged side by side with the work implement in the front-rear direction.

A work machine of Appendix 4 further comprises, in the work machine described in Appendix 2 or 3,
a housing portion that houses the controller, wherein
the housing portion is disposed to face all of the operation portion, the hood member, and the work implement.

According to a work machine of Appendix 5, in the work machine described in Appendix 4,
the housing portion has a first opening facing the work implement.

A work machine of Appendix 6 further comprises, in the work machine described in Appendix 5,
a detection device that detects a swing state of the work implement in a left-right direction of the machine body, wherein
the detection device is disposed at a position facing the first opening.

According to a work machine of Appendix 7, in the work machine described in Appendix 6,
the housing portion is disposed away from the detection device.

According to a work machine of Appendix 8, in the work machine described in any one of Appendices 4 to 7,
the housing portion includes a cover member that covers the controller, and
the cover member is detachably attached to the machine body.

According to a work machine of Appendix 9, in the work machine described in Appendix 8,
the housing portion has a second opening that communicates with an inside of the machine body.

According to a work machine of Appendix 10, in the work machine described in Appendix 9,
the second opening is formed on a lower end side of the housing portion.

A work machine of Appendix 11 further comprises, in the work machine described in Appendix 9 or 10,
an attachment member for attaching the controller, wherein
the cover member is disposed above the second opening, and
the attachment member passes through the second opening and is supported by the machine body.

According to a work machine of Appendix 12, in the work machine described in Appendix 11,
the controller is attached to the attachment member at a position facing the work implement.

A work machine of Appendix 13 further comprises, in the work machine described in any one of Appendices 4 to 12,
an exhaust port capable of discharging air to an outside of the machine body from an inside of the machine body, wherein
the exhaust port is formed on the second side in the front-rear direction with respect to the housing portion.

According to a work machine of Appendix 14, in the work machine described in Appendix 13,
the housing portion includes an inclined surface that is positioned on the second side of the housing portion in the front-rear direction, and
the inclined surface is inclined toward the first side in the front-rear direction from a lower side toward an upper side.

According to a work machine of Appendix 15, in the work machine described in Appendix 14,
a width of an inclined surface decreases toward the first side in the front-rear direction.

A work machine of Appendix 16 further comprises, in the work machine described in Appendix 14 or 15,
an opposing surface extending from a lower end of the inclined surface toward the second side in the front-rear direction, wherein
the exhaust port faces the opposing surface.

A work machine of Appendix 17 further comprises, in the work machine described in Appendix 16,
a partition plate disposed to face the operation portion, wherein
the partition plate extends from the exhaust port toward the inclined surface and the opposing surface.

Although the embodiment of the present invention has been described above, the scope of the present invention is not limited thereto, and the present invention can be implemented by expanding or changing it without departing from the gist of the invention.

### INDUSTRIAL APPLICABILITY

The present invention is applicable to work machines, such as a construction machine and an agricultural machine.

### REFERENCE SIGNS LIST

1 Hydraulic excavator (Work machine, Machine body)
3 Work implement
44 Operation portion
45b Exhaust port
71 Controller
71a Attachment member
72 Detection device
110 Housing portion
111 Cover member
451a Hood member
455a Partition plate
OP1 First opening
OP2 Second opening
OS Opposing surface
SS Inclined surface

## Claims

1. A work machine, comprising:
a controller;
an operation portion on which an operator rides and operates a machine body; and
a hood member that covers a portion of the machine body, wherein
the operation portion is installed on a first lateral side of the machine body,
the hood member is disposed on a second lateral side of the machine body, and
the controller is disposed between the operation portion and the hood member.

2. The work machine according to claim 1, further comprising:
a work implement disposed on a first side of the machine body in a front-rear direction, wherein
the controller is disposed on the first side of the machine body in the front-rear direction and on a second side of the work implement in the front-rear direction.

3. The work machine according to claim 2, wherein the controller is arranged side by side with the work implement in the front-rear direction.

4. The work machine according to claim 2, further comprising:
a housing portion that houses the controller, wherein
the housing portion is disposed to face all of the operation portion, the hood member, and the work implement.

5. The work machine according to claim 4, wherein the housing portion has a first opening facing the work implement.

6. The work machine according to claim 5, further comprising:
a detection device that detects a swing state of the work implement in a left-right direction of the machine body, wherein
the detection device is disposed at a position facing the first opening.

7. The work machine according to claim 6, wherein the housing portion is disposed away from the detection device.

8. The work machine according to claim 4, wherein
the housing portion includes a cover member that covers the controller, and
the cover member is detachably attached to the machine body.

9. The work machine according to claim 8, wherein the housing portion has a second opening that communicates with an inside of the machine body.

10. The work machine according to claim 9, wherein the second opening is formed on a lower end side of the housing portion.

11. The work machine according to claim 9, further comprising:
an attachment member for attaching the controller, wherein
the cover member is disposed above the second opening, and
the attachment member passes through the second opening and is supported by the machine body.

12. The work machine according to claim 11, wherein the controller is attached to the attachment member at a position facing the work implement.

13. The work machine according to any one of claims 4 to 12, further comprising:
an exhaust port capable of discharging air to an outside of the machine body from the inside of the machine body, wherein
the exhaust port is formed on the second side in the front-rear direction with respect to the housing portion.

14. The work machine according to claim 13, wherein
the housing portion includes an inclined surface that is positioned on the second side of the housing portion in the front-rear direction, and
the inclined surface is inclined toward the first side in the front-rear direction from a lower side toward an upper side.

15. The work machine according to claim 14, wherein a width of the inclined surface decreases toward the first side in the front-rear direction.

16. The work machine according to claim 14, further comprising:
an opposing surface extending from a lower end of the inclined surface toward the second side in the front-rear direction, wherein
the exhaust port faces the opposing surface.

17. The work machine according to claim 16, further comprising:
a partition plate disposed to face the operation portion, wherein
the partition plate extends from the exhaust port toward the inclined surface and the opposing surface.
